# NEUE EUROPÄISCHE PATENTSCHRIFT

(11) **EP 0 178 860 B2**
(45) Veröffentlichungstag und Bekanntmachung des Hinweises auf die Entscheidung über den Einspruch: **07.10.1998**
(45) Hinweis auf die Patenterteilung: 05.06.1991
(21) Anmeldenummer: 85307290.8
(22) Anmeldetag: 11.10.1985
(51) Int. Cl.: G21C 17/06

(54) **Wasserdetektion in Kernbrennstoffstäben**
Detecting water in nuclear fuel rods
Détection de l'eau dans les barres combustibles nucléaires

(30) Priorität: 15.10.1984 US 660786
(43) Veröffentlichungstag der Anmeldung: 23.04.1986
(73) Patentinhaber: SIEMENS AKTIENGESELLSCHAFT, 80333 München (DE)
(72) Erfinder: Blair, Thomas Raymond, Kennewick Washington 99336 (US); Ho, Quang Dang, West Richland Washington 99352 (US); van Swam, Leo Francis Petrus, Richland Washington 99352 (US)

(56) Entgegenhaltungen:
- EP-A- 18 290
- EP-A- 82 102
- EP-A- 0 115 231
- DE-A- 2 605 962
- DE-A- 2 817 859
- FR-A- 2 341 183
- FR-A- 2 389 972
- NONDESTRUCTIVE EVALUATION IN THE NUCLEAR INDUSTRY, PROCEEDINGS OF THE THIRD INTERNATIONAL CONFERENCE, Salt Lake City, Utah, US, 11th-13th February 1980, pages 23-45; J.T.A. ROBERTS: "Nuclear fuel NDE"
- ATOMKERNENERGIE-KERNTECHNIK, vol. 47, no. 1, July 1985, pages 34-36, Munich, DE; O. FICKEL: "Untersuchungen zur Schadenslokalisierung an Dampferzeugern und Brennelementen bei Leichtwasserreaktoren"
- Berichtsband 8 der Deutschen Gesellschaft für Zerstörungsfreie Prüfung e. V., Mai 1981, Seiten 441-446
- Krautkrämer: Werkstoffprüfung mit Ultraschall, 3. Auflage, Seiten 442, 450, 451

## Beschreibung

This invention relates to a method of distinguishing nuclear fuel rods containing water from rods free of water and to an apparatus for detecting the presence of detecting water in nuclear fuel rods.

By far, the majority of nuclear power reactors are water cooled and moderated reactors, utilizing enriched uranium dioxide as fuel. The core of the reactor is formed by elongated fuel rods which are grouped into bundles which are generally square in cross sections. The rods have diameters usually in the range of 0.635cm to 1.27cm (one-fourth to one-half inch) and may be 3.05m or 3.66m (ten or twelve feet) long. They are held parallel and closely spaced from each other. Each rod is formed of a jacket or "cladding" made of a zirconium alloy or stainless steel, which is filled with the uranium dioxide. Most commonly, the uranium dioxide is in the form of pellets which are just enough smaller than the cladding to slide in conveniently. The uranium dioxide may, on the other hand, be in the form of microspheres or granules which are compacted within the cladding. The remainder of the space within the cladding is commonly filled with helium, which has a high thermal conductivity. The helium is normally under high pressure, say 28.12 kp/cm² (400 pounds per square inch).

During the operation of the reactor, holes may develop in the cladding due to stress, corrosion, wear, or defective welding to the end plugs which close the ends of the cladding tubes. If this happens, the helium and fission gases will espace into the cooling water of the reactor and the water will enter the cladding tubes.

After a given fuel assembly has been exposed in the reactor for a given length of time, it is taken out, checked for defects, repaired if necessary, and either returned to the reactor or sent for reprocessing or permanent storage. If the assembly is to be returned to the reactor, it is almost essential that it be checked for defective fuel rods. These irradiated assemblies are highly radioactive and must be stored and inspected under water in order to remove heat caused by the decay of fission products as well as to protect persons working with them. It is therefore highly desirable to provide a method of testing fuel rods for leaks while they are assembled and underwater. One method of doing so is by ultrasonic testing. Such a method is disclosed in U.S. Patent 4,313,791, granted February 2, 1982 and assigned to the Babcock and Wilcox Company. In this method, a transducer emitting ultrasonic vibrations is placed against a fuel rod and an ultrasonic beam is transmitted into the rod by the transducer. The test is performed on a portion of the fuel rod which does not contain uranium dioxide. An analysis of the waves received by a pulse-echo system, reveals whether or not this portion of the rod is filled with water. Defective fuel rods are ascertained by measurement of ultrasonic reflection within the rods from the inner wall surface remote from the transducer which is a transmit-receive-transducer. It is disclosed as carried out at the lower plenum of a fuel rod and apparently would not be operative in a portion of a rod where uranium dioxide is present.

A weakness of this method lies in the fact that many, probably most, fuel rods do not have a lower plenum.

An article in "Gesellschaft für Zerstörungsfreie Prüfung e.V., Berichtsband 8"May 1981, pp 441 - 446, describes a method of detecting by means of ultrasonic signals the presence of water in a cladding tube of a fuel rod. In this method, the emitter is positioned at one side of the tube and the receiver is positioned nearly diametrically opposite to the emitter on the other side of the tube. Emitter and receiver being arranged in this way, the signal enters the wall of the tube and finally arrives, after a number of reflections at the inner and the outer surface of the tube, at the receiver. In case of the presence of water within the tube, the amplitude of the signal is reduced. It is indicated in the article that the method was applied for detecting water in ranges of the tube with and without fuel pellets.

According to the invention from one aspect there is provided a method of distinguishing nuclear fuel rods containing water from rods free from water, such rods being arranged in an assembly in straight spaced rows, comprising moving a single ultrasonic transmit-receive transducer parallel to one of said rows, but spaced from the fuel rods in said row, and continuously emitting bursts of ultrasound in the direction of said rods and at right angles to their axis; upon reception of an initial echo from the external surface of a rod, recording that echo over a preselected first period of time on a recording medium and - after a predetermined length of time chosen to exclude a pulse resulting from the reflection of the ultrasound from the outer wall of the rod, back to the transducer, again to said outer wall and again to the transducer, and for a limited second periode of time, corresponding to echoing entirely within the cladding wall - recording reception of a second repetitive echo greater than a predetermined threshold, said second echo resulting from echoing back and forth between the outer surface and the inner surface of the cladding of said rod nearest to the transducer, the absence of said second echo above said threshold indicating the presence of water.

According to the invention from a second aspect there is provided apparatus for detecting the presence of water in tubular members, said tubular members being aligned in parallel rows in an assembly, comprising an elongated probe bearing an elongated torsionally flexible handle, at least one alignment tab mounted on said handle near an end, an ultrasonic transmit-receive transducer mounted in said alignement tab near said end, said tab being spaced from a leaf spring and extending at right angles to said handle, one face of said tab being adapted to bear against at least one tubular member in a first one of said rows, the spring near the same end and spaced from said tab so as to engage at least one of said tubular members in a second one of said rows adjacent to said first row, sound absorbing material arranged so as to prevent receipt of false signals from said handle, tab, spring, and transducer and sound absorbing material being so related that when said probe is inserted between two rows of tubular members, said transducer will emit a beam at right angles to the axes of said tubular members of said second row and receive reflections of said beam from said tubular members of said second row.

When putting the invention into effect a transducer is traversed through a fuel assembly, spaced from a row of rods which is to be checked. During the traverse, a series of ultrasonic pulses is emitted from the transducer in the form of a beam. When the beam strikes a fuel rod, it is reflected from the outer surface. If the beam is exactly normal to the surface. It will be reflected back into the transducer. By the use of well-known electrical systems, this gives rise to an electrical signal. This method is termed the "pulse-echo" technique. Not all of the ultrasonic beam is reflected at the outer surface, however. A portion continues in the tubing wall and strikes the inner surface of the cladding. In a perfect rod, this is in effect a metal-gas interface. No matter how close the fit between the tube and the uranium dioxide, the contact is not sufficient for efficient transfer of sound energy. Neither is the ultrasound efficiently transmitted by the helium gas. There is, therefore, a reflection from the inner surface of the tubing as well as from the outer surface. In fact, the ultrasound is reflected back and forth between the inner and outer walls of the tubing, producing what is termed, "wall ringing". This wall ringing is recorded by the electronic system referred to above. If the tube has filled with water, there will be an efficient transfer of the ultrasonic energy from the tubing wall into the water, where it is effectively dispersed. This greatly attenuates the wall ringing. It is immaterial whether uranium dioxide is present or not. The efficient "coupling" of the cladding to the water within the tube results in the attenuation of the wall ringing and so identifies a defective tube.

According to a preferred embodiment, as the transducer is moved along a row of fuel rods, it continuously emits a series of ultrasonic pulses. Typically, the ultrasound has a frequency of 15-20 megahertz and the pulses have a repetition rate of 1-8 kilohertz. When it receives an echo from the outer surface of a fuel rod, a signal is transmitted to a recording medium, e.g., a strip chart. This is done over a pre-selected period of time which may be termed a "time window". After a delay, which is chosen in accordance with the thickness and other characteristics of the cladding, the echo from the "wall ringing" is sampled during another "time window" and, if its amplitude is above a pre-selected threshold, a second signal is transmitted to the recording medium. Absence of this second signal indicates that water is present within the tube and that the latter is defective.

The transducer used for performing the check for the presence of water is mounted on a probe which is so constructed as to provide the proper spacing between the tubes to be tested and the transducer, and also for the proper positioning of the transducer so that the beam will be perpendicular to the fuel rod axes.

An indexing system may be provided which permits the probe to be accurately and rapidly inserted into the fuel assembly while the latter is under water. This indexing system includes a plate having grooves which are parallel to the rows of fuel rods which are to be checked and which are spaced apart the same distance as those rows. A reciprocating system acting along those grooves moves the probe along the rows of fuel elements in the assembly. When the reciprocating element is retracted, a pressure medium automatically moves it to the next groove, and in this manner, the assembly can be checked very quickly.

The invention will be better understood from the following description given by way of example and with reference to the accompanying drawings, in which:-

Figure 1 is a perspective view of a probe for performing the acoustic test.

Figure 2 is a perspective view of one form of testing apparatus in relation to a fuel assembly being tested.

Figure 3 is a diagrammatic view showing the operation of the apparatus of Figure 2.

Figure 3A is an enlarged diagrammatic view of a portion of plate 26 (Figure 3), showing the movement of pin 22.

Figure 4 is a plan view showing the probe head at the time of making a test.

Figure 5A and 5B are reproductions of oscilloscope recordings of echoes from a sound and a defective fuel rod, respectively.

Figure 6 is a reproduction of strip chart records as the probe is passed along a row of rods.

Figure 7 is a portion of a record like that of Figure 6 on an expanded time scale and showing the relationship with a row of fuel rods.

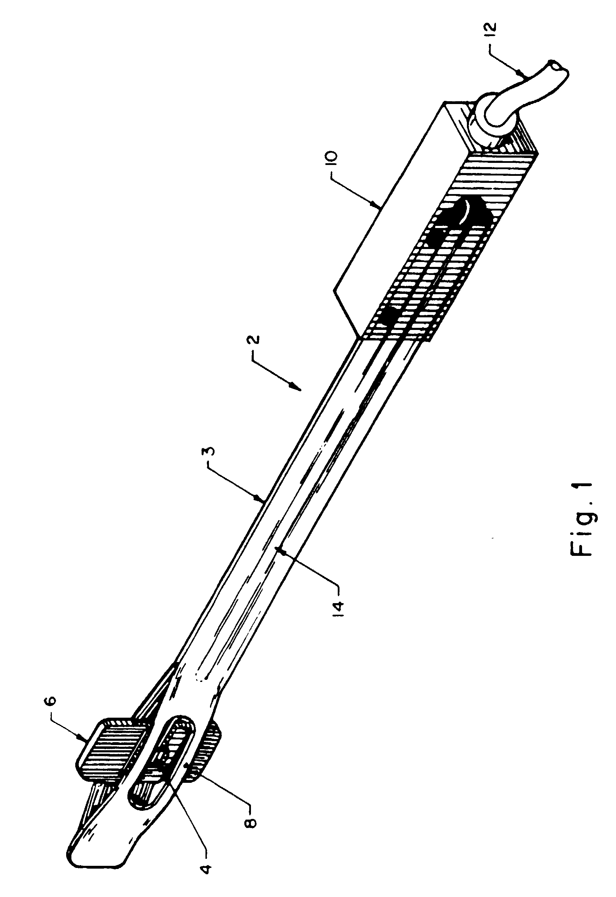

Referring to the drawings, Figure 1 shows the basic probe structure 2 used in our test. It includes a probe handle 3, near one end of which is a transducer 4. The transducer is mounted in an alignment tab 6, which is spaced from an apertured leaf spring 8. At the other end of probe handle 3 is a mounting block 10 which serves as the connector for the electrical cable 12. Probe handle 3 is fabricated from two strips of stainless steel which are welded together. A reinforcing rib 14 in each piece increases axial rigidity of the handle, yet maintains the torsional flexibility required for the probe head to be properly aligned by the alignment tabs 6. These ribs also provide space for the signal wires to pass from transducer 4 to cable 12.

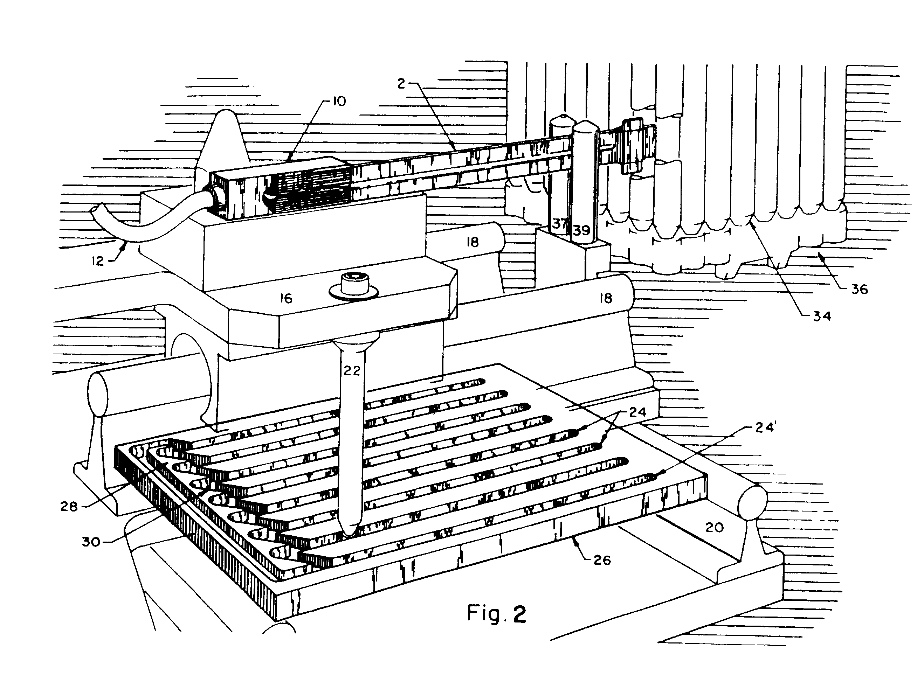

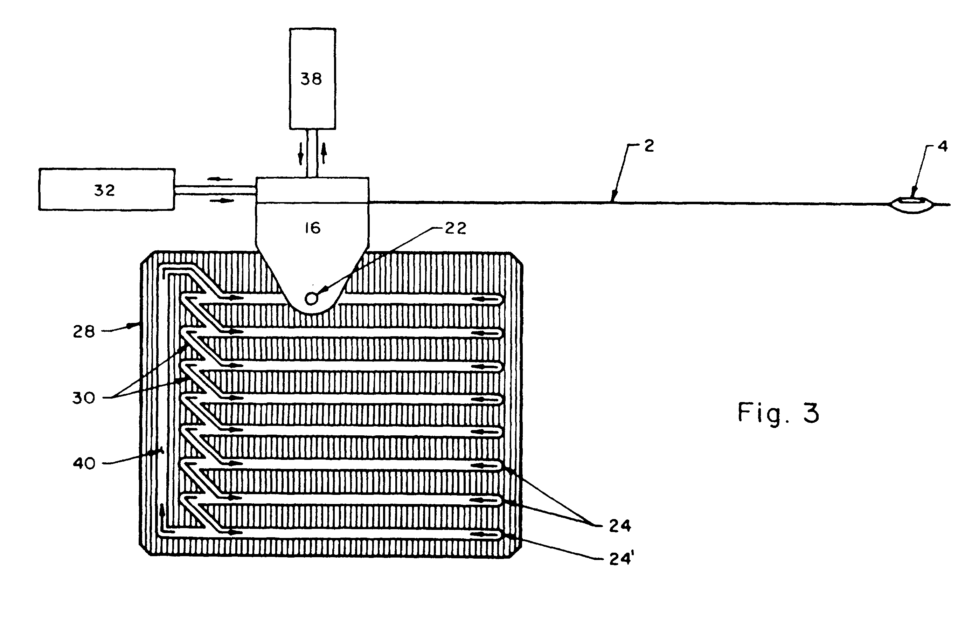

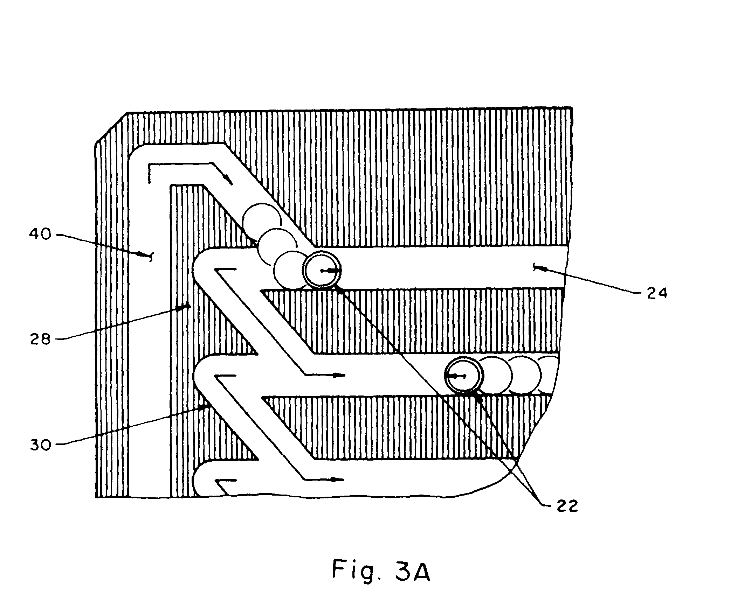

Figures 2, 3 and 3A show the operating means by which the probe is inserted into the fuel assembly. The mounting block 10 is carried on a support means 16, which rides on rails 18,18', which provide for longitudinal movement, and on rails 20. which provide for transverse movement. A guide pin 22 slides in grooves 24 of index plate 26. The grooves 24 are open at one end, shown at the left in Figures 2 and 3 and are faced by deflection plate 28 which is provided with multiple deflecting surfaces 30, each of which faces one of the grooves 24. The actuating means, which are not shown on Figure 2, are indicated diagrammatically on Figure 3. A reciprocating hydraulic cylinder 32 moves carrier 16 and probe 2 longitudinally of the latter so that the transducer is moved along a row of fuel rods 34 in fuel assembly 36. At the same time, pneumatic cylinder 38 exerts a continuous pressure laterally. Under the influence of these cylinders, the pin 22 moves longitudinally along a groove 24 to the right in Figure 2, then returns When it reaches the left-hand end of the groove the force of pressure cylinder 38 forces it laterally along the deflecting surface 30 to the next groove 24, as best shown in Figure 3A. These grooves are spaced apart the same distance as the spaces between the rows of fuel elements 34. The transducer, therefore, passes successively along the rows of fuel elements in the fuel assembly 36. When the pin 22 has moved in both directions along the last groove 24, indicated as 24', the operator reverses the direction of pressure exerted by pneumatic cylinder 38. The pin 22 then moves back along the groove 40 at the end of index plate 26 to the starting position, carrying with it the carrier 16 and the probe 2.

Members 37 and 39 are guide members, made in the same form as the fuel tubes 34. One of these members is open at both ends. When the system is immersed in water, it fills, so that it simulates a defective fuel tube. This provides a check on the operation of the system during actual testing.

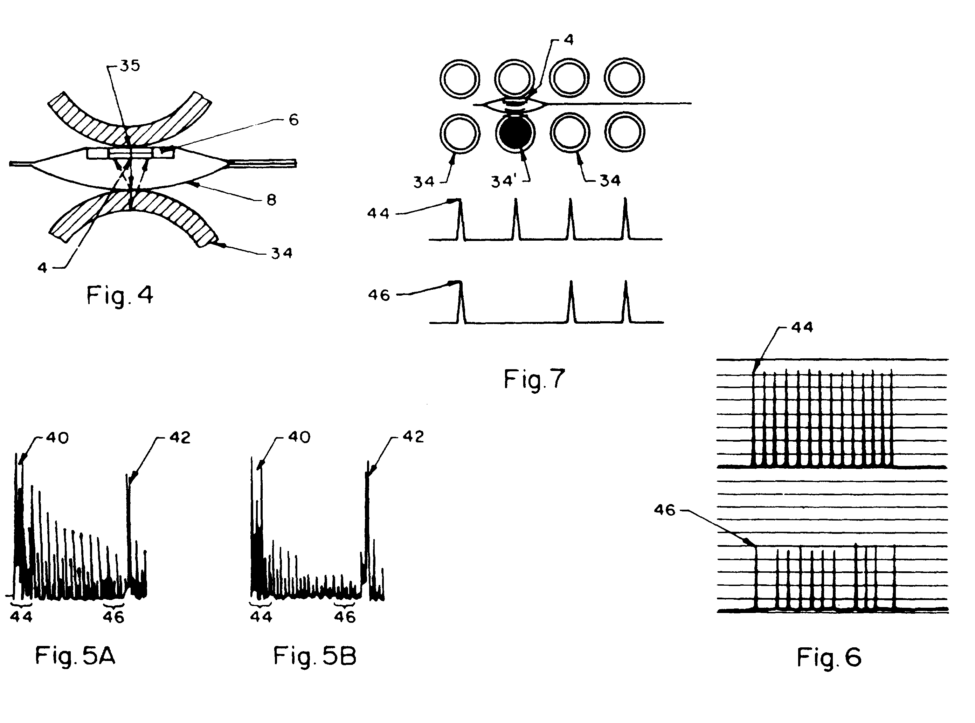

Figure 4 shows the position of the transducer 4 relative to a tube 34 when a test is made. As the probe is inserted between the rows of tubes 34, the transducer 4 continuously emits a series of pulses. When the transducer is in most positions of its travel, no reflection from a tube is returned to it. However, when it is in the position shown in Figure 4, the ultrasound waves follow the paths shown by the arrows, resulting in echos received and recorded by the transducer. Sound absorbing material 35, e.g., cork, prevents receipt of false signals from the rear.

Figures 5A and 5B show typical examples of the form of the echo as recorded on an oscilloscope. The horizontal axis of these graphs measures time while the vertical axis measures the amplitude of the echos received by the transducer. Figure 5A shows the signals characteristic of a tube which contains no water. There is first an echo 40 from the external surface of the tube 34. Then follows a series of echos of diminishing amplitude, resulting from reflection of ultrasound back and forth between the inner and outer surfaces of the tube, known as "wall ringing".

Finally, there is another pulse 42 which results from the reflection of the ultrasound from the outer wall, back to the transducer, again to the outer wall, and again to the transducer. This is termed the "second water path".

Figure 5B shows the signal when the rod contains water. It has the same general pattern as Figure 5A; however, the "wall ringing" declines much more rapidly in amplitude and has almost disappeared by the time the second water path 42 is recorced.

In making the test, the instrumentation is so designed that when the signal 40 is received by the transducer, there is a recordation over a "time window" 44. After a specified lapse of time, chosen to exclude the second water path, there is again a recording of the signal over the "time window" 46, provided the signal at this time is above a predetermined amplitude. If the signal is below that level, no recording is made. A sample of such a record is shown in Figure 6. In this figure, the upper row records the echo received in the time windows 44 from each rod traversed by the transducer, while the lower row indicates the signals received during the time windows 46. It will be noted that in some instances there is no recording 46 corresponding to a record 44. The relationship is shown in larger scale and in relation to the tubes in Figure 7. This figure shows a row of tubes 34 including one defective tube 34' which contains water. The upper signal trace shows the echos received during the time window 44. The lower shows echos received during the time window 46. It will be noted that no signal 46 appears opposite the defective tube 34'.

The entire traverse of the transducer along a row of tubes 34 (Figure 2) requires only a very few seconds; hence, an assembly can be checked very quickly with this system.

## Patentansprüche

1. Verfahren zum Unterscheiden zwischen Wasser enthaltenden Kernbrennstäben und wasserfreien Stäben in einem Verband aus Stäben, die in geradlinigen, beabstandeten Reihen angeordnet sind, wobei ein einzelner Ultraschallübertrager als Sender und Empfänger parallel zu einer dieser Reihen, aber mit Abstand von den Stäben dieser Reihe bewegt wird und ständig Ultraschallstöße in Richtung dieser Stäbe und rechtwinklig zu deren Achsen ausgesandt werden, nach Empfang eines Initialechos von der Außenoberfläche eines Stabes (34) das Echo (40) über eine vorbestimmte erste Zeitspanne (44) auf einem Registriermittel registriert wird und nach einem vorgegebenen Zeitraum, mit dem ein Puls (42) ausgeschlossen wird, der durch Reflexion des Ultraschalls von der Außenwand des Stabes (34) zurück zum Übertrager (4), wieder zu dieser Außenwand und wieder zum Übertrager (4) entsteht und für eine zweite begrenzte, dem vollständigen Nachhalten innerhalb der Kühlrohrwand entsprechenden Zeitspanne (46) der Empfang eines wiederkehrenden zweiten Echos, das aus dem Hin- und Zurückwerfen des Ultraschalls zwischen der Außenoberfläche und der Innenoberfläche des Hüllrohrs dieses dem Übertrager nächstgelegenen Stabes resultiert, mit einer einen vorgegebenen Schwellwert übersteigenden Stärke registriert wird, wobei das Ausbleiben des zweiten über dem Schwellwert liegenden Echos die Gegenwart von Wasser anzeigt.

2. Verfahren nach Anspruch 1, bei dem der besagte Übertrager benachbart zu einem Teil der besagten Stäbe mit in einer zylindrischen metallischen Außenhülse enthaltenem keramischen Kernbrennstoff positioniert wird und bei dem das erste Echo von der Außenoberfläche der Hülsenwand eines dem besagten Übertrager am nächsten befindlichen Stabes registriert wird, wenn der besagte Übertrager auf die Achse des besagten Stabes ausgerichtet ist.

3. Verfahren nach Anspruch 1, bei dem der Ultraschall eine Frequenz von 15 bis 20 MHz und die Pulse einen Wiederholungstakt von 1 bis 8 kHz haben.

4. Vorrichtung zum Erfassen der Anwesenheit von Wasser in Rohrstücken, die in parallelen Reihen zu einem Verband angeordnet sind, mit einer langgestreckten Sonde mit einem langestreckten, grillflexiblen Halter (3), mindestens einer Richtzunge (6), die am Halter nahe an einem Ende angeordnet ist, einem an der Richtzunge (6) in der Nähe des Endes befestigten Ultraschallträger (4) als Sender und Empfänger, wobei die Zunge von einer Feder (8) beabstandet ist und sich rechtwinklig zum Halter erstreckt, eine Seite der Zunge gegen wenigstens ein Rohrstück in einer ersten dieser Reihen abstützbar ist und die Feder am gleichen Ende und im Abstand von der Zunge angeordnet ist, um sich an wenigstens einen der Rohrstücke in einer zweiten, der ersten Reihe benachbarten Reihe abzustützen, ferner mit schallschluckendem Werkstoff, um den Empfang falscher Signale vom Halter, der Zunge, der Feder und dem Übertrager zu unterdrücken, sowie schallschluckendem Werkstoff, der so angeordnet ist, daß der Übertrager beim Einführen der Sonde zwischen zwei Reihen der Rohrstücke einen Strahl aussendet, der rechtwinklig zu den Achsen der Rohrstücke der zweiten Reihe läuft, und Reflexionen dieses Strahles an den Rohrstücken der zweiten Reihe empfängt.

5. Vorrichtung nach Anspruch 4, mit einem zusätzlichen Rohr, das beim Testen mit Wasser gefüllt und so angeordnet ist, daß es den Übertrager während eines Tests zur Kontrolle der Funktionsfähigkeit der Vorrichtung passiert.

6. Vorrichtung nach einem der Ansprüche 4 bis 5, mit einem zusätzlichen Mittel, das mit dem Übertrager verbunden und ihm so zugeordnet ist, daß es die Abklingrate des Ausgangssignals des Übertragers, das dem Empfang eines Echos von einem Stab durch den besagten Übertrager folgt, mit einer vorgegebenen Abklingrate vergleicht, die, wenn sie überschritten wird, kennzeichnend dafür ist, daß der Kernbrennstoffstab Wasser enthält.

## Claims

1. A method of distinguishing nuclear fuel rods containing water from rods free from water, such rods being arranged in an assembly in straight spaced rows, comprising moving a single ultrasonic transmit-receive transducer parallel to one of said raws, but spaced from the fuel rods in said row, and continuously emitting bursts of ultrasound in the direction of said rods and at right angles to their axes; upon reception of an initial echo from the external surface of a rod (34) recording said echo (40) over a preselected first period (44) of time on a recording medium and after a predetermined length of time chosen to exclude a pulse (42) resulting from the reflection of the ultrasound from the outer wall of the rod (34), back to the transducer (4), again to said out wall and again to the transducer (4) and for a limited second period of time (46) corresponding to echoing entirely within the cladding wall, recording reception of a second repetitive echo greater than a predetermined threshold, said second echo resulting or echoing back and forth between the outer surface and the inner surface of the cladding of said rod nearest to the transducer, the absence pf said second echo above said threshold indicating the presence of water.

2. A method according to claim 1 wherein said transducer (4) being positioned adjacent to a portion of said rods which contain ceramic fuel in an outer cylindrical metallic cladding and the first echo (40) being recorded from the outer surface of the wall of the cladding of a rod (34) nearest said transducer (4) when said transducer (4) is aligned with the axis of said rod (34).

3. A method as defined in claim 1, wherein the ultrasound has a frequency of 15-20 megahertz and the pulses have a repetition rate of 1-8 kilohertz.

4. Apparatus for detecting the presence of water in tubular members (34), said tubular members being aligned in parallel rows in an assembly, comprising an elongated probe bearing an elongated torsionally flexible handle (3), at least one alignment tab (6) mounted on said handle near an end, an ultrasonic transmit-receiver transducer (4) mounted in said alignment tab near said end, said tab being spaced from a leaf spring (8) and extending at right angles to said handle, one face of said tab being adapted to bear against at least one tubular member in a first one of said rows, the spring (8) near the same end and spaced from said tab so as to engage at least one of said tubular members in a second one of said rows adjacent to said first row, sound absorbing material arranged so as to prevent receipt of false signals from the said handle, tab, spring, and transducer, and sound absorbing material being so related that when said probe is inserted between two row of tubular members, said transducer will emit a beam at right angles to the axes of said tubular members of said second row and receive reflections of said beam from said tubular members of said second row.

5. Apparatus as claimed in Claim 4 further comprising a tube which is filled with water during testing, so positioned that the transducer passes it during a test, thereby checking the operation of said apparatus.

6. Apparatus as claimed in any one of claims 4 to 5, further comprising means connected to the transducer and arranged to compare the rate of decay of the transducer output signal, following receipt by said transducer of an echo from a rod, with a predetermined decay rate which, if exceeded is indicative of that fuel rod containing water.

## Revendications

1. Procédé pour distinguer des crayons combustibles nucléaires contenant de l'eau de crayons qui n'en contiennent pas, ces crayons étant disposés dans un assemblage en rangées rectilignes à distance les unes des autres, qui consiste à déplacer un transducteur ultrasonore unique, parallèlement à l'une des rangées. mais à distance des crayons combustibles de la rangée et à émettre en continu des rafales d'ultrasons dans la direction de ces crayons et à angles droits par rapport à leur axe ; après réception d'un écho initial d'un crayon (34), à enregistrer cet écho (40) sur un support d'enregistrement, et, après un laps de temps prescrit choisi pour exclure une impulsion (42) provenant de la réflexion de l'ultrason par la paroi extérieure du crayon (34) revenant au transducteur (4), allant à nouveau à la paroi extérieure et à nouveau au transducteur (4), et pendant un second laps de temps (46) limité correspond à l'obtention d'un écho entièrement dans la paroi de la gaine , à enregistrer la réception d'un second écho répétitif plus grand à un seuil prescrit, ce second écho provenant de l'écho allant et venant entre la surface extérieure et la surface intérieure de la gaine du crayon le plus proche du transducteur, l'absence de ce second écho au-dessus du seuil indiquant la présence d'eau.

2. Procédé suivant la revendication 1, dans lequel le transducteur (4) est disposé de manière adjacente à une partie des crayons qui contiennent du combustible céramique dans une gaine métallique extérieure cylindrique, le premier écho (40) enregistré provenant de la surface extérieure de la paroi de la gaine d'un crayon (34) le plus proche du transducteur, quand ce transducteur (41) est aligné avec l'axe de ce crayon (34).

3. Procédé suivant la revendication 1, dans lequel les ultrasons ont une fréquence de 15 à 20 mégahertz et les impulsions ont une fréquence de répétition de 1 à 8 kilohertz.

4. Dispositif de détection de la présence d'eau dans des éléments tubulaires, ces éléments tubulaires étant alignés en rangées parallèles dans un assemblage comprenant un détecteur oblong portant un manche (3) oblong et souple en torsion, au moins une languette d'alignement montée sur le manche à proximité d'une extrémité, un transducteur (4) ultrasonore émetteur-récepteur monté dans la languette d'alignement à proximité de l'extrémité, la languette étant à distance d'un ressort (8) à lame et s'étendant à angles droits par rapport au manche, une face de la languette étant apte à porter sur au moins un élément tubulaire d'une première des rangées, le ressort (8) étant proche de la même extrémité et à distance de la languette de manière à venir en contact avec au moins l'un des éléments tubulaires d'une seconde des rangées adjacentes à la première rangée, un matériau d'absorption du son disposé de manière à empêcher la réception de faux signaux provenant du manche, de la languette, du ressort et du transducteur, et du matériau absorbant le son étant disposé de manière que, lorsque le détecteur est inséré entre deux rangées d'éléments tubulaires, le transducteur émettra un faisceau à angles droits des axes des éléments tubulaires de la seconde rangée et recevra des réflexions de ce faisceau en provenance des éléments tubulaires de la seconde rangée.

5. Appareil suivant la revendication 4, comprenant en outre un tube qui est empli d'eau pendant l'essai et qui est disposé de manière que le transducteur passe devant lui pendant un essai, de façon à vérifier le fonctionnement de l'appareil.

6. Appareil suivant l'une quelconque des revendications 4 à 5, comprenant en outre des moyens reliés au transducteur et agencés de manière à comparer la vitesse de décroissance du signal de sortie du transducteur, faisant suite à la réception par ce transducteur d'un écho provenant d'un crayon, à une vitesse de décroissance prescrite qui, si elle est dépassée, indique que le crayon combustible contient de l'eau.
